# EUROPEAN PATENT APPLICATION

(11) **EP 4 672 536 A1**
(43) Date of publication of application: **31.12.2025**
(21) Application number: 25185187.9
(22) Date of filing: 25.06.2025
(51) Int. Cl.: H02J 1/14, F25B 25/00, F25B 49/02, H02J 3/32, H02J 7/34

(54) **SYSTEMS AND METHODS FOR UTILIZING A GRID-CONNECTED HEAT PUMP COUPLED TO AN ENERGY MANAGEMENT SYSTEM**

(30) Priority: 26.06.2024 US 202463664549 P; 13.02.2025 US 202519053149
(71) Applicant: Heatshift, LLC, Deer Grove IL 61243 (US)
(72) Inventor: LORENTZEN, David, Deer Grove 61243 (US); HOVE, Erik, Deer Grove 61243 (US)
(74) Representative: Pfenning, Meinig & Partner mbB

(57) **Abstract**

A method is provided. The method comprises: obtaining a current state of charge of an energy storage device of a thermal pump system, wherein the thermal pump system comprises a heat pump; determining one or more operating modes for the thermal pump system based on the current state of charge of the energy storage device; and controlling the thermal pump system based on the one or more operating modes, wherein controlling the thermal pump system comprises electrically connecting the energy storage device and/or an external power source to the heat pump such that the energy storage device and/or the external power source provide power to the heat pump.

## Description

### CROSS-REFERENCE TO RELATED APPLICATIONS

This patent application claims the benefit of U.S. Provisional Patent Application No. 63/664,549, filed June 26, 2024, which is incorporated by reference herein.

### BACKGROUND

Electrification of heating may have the potential to challenge the electric grid by increasing and shifting peak demand. Current peak load tends to occur in summer evenings, driven by electric-powered space cooling. However, more energy is used for space and water heating, especially in northern states. Currently, this heating load is primarily served by natural gas, but heat pump technology has improved considerably and is now cost-competitive in many regions, with the potential for lower emissions. As natural gas equipment is replaced by heat pumps, peak load in certain regions may increase and shift to winter.

Energy storage resources anywhere on the grid can address increasing peak loads, but often face a tradeoff between economies of scale and locational value. Utility-scale storage benefits from scale with reduced installation cost per unit of storage capacity, but suffers from line loss when delivering energy over transmission and distribution systems that may be congested at the time. Standalone on-site storage benefits from higher efficiency by bypassing the transmission and distribution systems when used for self-consumption, but suffers from high installation costs per unit of storage capacity. Furthermore, both utility-scale and on-site energy storage typically require inverters to convert the outgoing power to alternating current (AC) for the transmission system or building wiring, respectively. This equipment, and the associated power conversion, also has a cost, as many loads operate in direct current (DC).

### SUMMARY

In some instances, a system is provided. The system includes a thermal pump system, comprising: a heat pump; an energy storage device configured to provide power to the heat pump; and a controller configured to: receive, from a remote computing system, a request for a current state of charge of the energy storage device; provide, to the remote computing system, the current state of charge of the energy storage device; receive, from the remote computing system, one or more control instructions instructing the thermal pump system to power the heat pump using the energy storage device and/or an external power source; and based on the one or more control instructions, electrically connect the energy storage device and/or the external power source to the heat pump such that the energy storage device and/or the external power source provide power to the heat pump. The system further comprises the remote computing system configured to: provide the request for the current state of charge of the energy storage device; receive the current state of charge of the energy storage device; generate the one or more control instructions based on the current state of charge of the energy storage device; and provide the one or more control instructions to the controller of the thermal pump system.

In some examples, a method is provided. The method comprises: obtaining a current state of charge of an energy storage device of a thermal pump system, wherein the thermal pump system comprises a heat pump; determining one or more operating modes for the thermal pump system based on the current state of charge of the energy storage device; and controlling the thermal pump system based on the one or more operating modes, wherein controlling the thermal pump system comprises electrically connecting the energy storage device and/or an external power source to the heat pump such that the energy storage device and/or the external power source provide power to the heat pump.

In some variations, a non-transitory computer-readable medium having processor-executable instructions stored thereon is provided. The processor-executable instructions, when executed, facilitate: obtaining a current state of charge of an energy storage device of a thermal pump system, wherein the thermal pump system comprises a heat pump; determining one or more operating modes for the thermal pump system based on the current state of charge of the energy storage device; and controlling the thermal pump system based on the one or more operating modes, wherein controlling the thermal pump system comprises electrically connecting the energy storage device and/or an external power source to the heat pump such that the energy storage device and/or the external power source provide power to the heat pump.

All examples and features mentioned herein may be combined in any technically possible way.

### BRIEF DESCRIPTION OF THE DRAWINGS

The subject technology will be described in even greater detail below based on the exemplary figures, but is not limited to the examples. All features described and/or illustrated herein can be used alone or combined in different combinations. The features and advantages of various examples will become apparent by reading the following detailed description with reference to the attached drawings which illustrate the following:
FIG. 1 is a simplified block diagram depicting an exemplary computing environment in accordance with one or more examples of the present application.
FIG. 2 is a simplified block diagram of one or more devices or systems within the exemplary environment of FIG. 1.
FIG. 3A is a simplified block diagram depicting an exemplary thermal pump system environment in accordance with one or more examples of the present application.
FIG. 3B is a simplified circuit diagram of a thermal pump system in accordance with one or more examples of the present application.
FIG. 4 is a simplified block diagram depicting a thermal pump system within a building in accordance with one or more examples of the present application.
FIG. 5 is an exemplary process for controlling a thermal pump system using a remote computing system in accordance with one or more examples of the present application.
FIG. 6 shows an exemplary flowchart for optimizing the control of the thermal pump system in accordance with one or more examples of the present application.
FIGs. 7A and 7B show an exemplary flowchart for installing and configuring the thermal pump system in accordance with one or more examples of the present application.
FIGs. 8A-8D shows exemplary objectives of the thermal pump system in accordance with one or more examples of the present application.

### DETAILED DESCRIPTION

Examples of the presented application will now be described more fully hereinafter with reference to the accompanying FIGs., in which some, but not all, examples of the application are shown. Indeed, the application may be exemplified in different forms and should not be construed as limited to the examples set forth herein; rather, these examples are provided so that the application will satisfy applicable legal requirements. Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on".

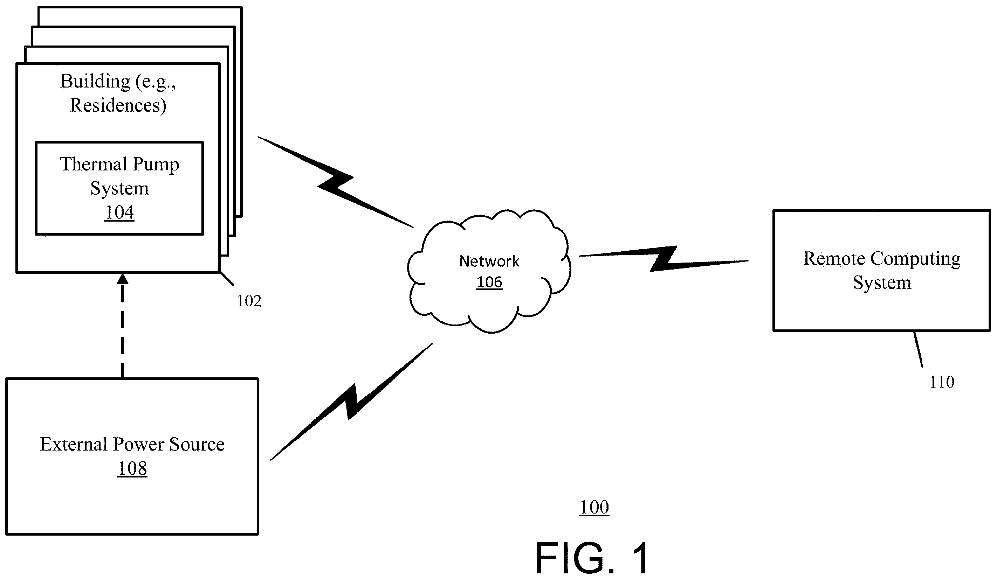

Systems, methods, and computer program products are herein disclosed for utilizing a grid-connected heat pump coupled to an energy management system. FIG. 1 is a simplified block diagram depicting an exemplary environment in accordance with an example of the present application. The environment 100 includes one or more buildings 102, an external power source 108, and a remote computing system 110. Each of the one or more buildings include a thermal pump system 104. Although the entities within environment 100 may be described below and/or depicted in the FIGs. as being singular entities, it will be appreciated that the entities and functionalities discussed herein may be implemented by and/or include one or more entities.

The entities within the environment 100 such as the thermal pump systems 104, the remote computing system 110, and the external power source 108 may be in communication with other systems or facilities within the environment 100 via the network 106. The network 106 may be a global area network (GAN) such as the Internet, a wide area network (WAN), a local area network (LAN), or any other type of network or combination of networks. The network 106 may provide a wireline, wireless, or a combination of wireline and wireless communication between the entities within the environment 100.

The buildings 102 may be any type of building, facility, structure, property, and/or site that comprises a thermal pump system 104. For example, in some variations, one or more of the buildings 102 may be a residence such as a structure where a single individual or a family unit may reside. Additionally, and/or alternatively, one or more of the buildings 102 may be commercial buildings such as offices, industrial facilities, retail facilities, medical facilities, and/or multi-family homes (e.g., apartments, condominiums, and/or other properties that are capable of housing multiple families).

Each of the buildings 102 may include a thermal pump system 104 that comprises a heat pump (e.g., an air conditioning unit). The heat pump is a device that uses work to transfer heat from a cool space to a warm space by transferring thermal energy using a refrigeration cycle, cooling the cool space and warming the warm space. In cold weather, the heat pump may move heat from the cool outdoors to warm a house; the pump may also be designed to move heat from the house to the warmer outdoors in warm weather. As the heat pump transfers heat rather than generating heat, they are more energy-efficient than other ways of heating or cooling a home.

The thermal pump system 104 may further include an energy storage device (e.g., a battery or other energy storage device), an energy management system (EMS), a communication interface (e.g., a gateway), and one or more controllers, which are configured to control the heat pump by switching between powering the heat pump using an external power source 108 and/or the energy storage device that is within the thermal pump system 104. The controllers that are used to control how the heat pump is powered may be located within the EMS, the communication interface, and/or separate from both the EMS and the communication interface. For instance, in some examples, in a first operating mode, the EMS may be configured to connect the heat pump to the external power source 108 such that the external power source 108 supplies electrical power to the heat pump, and the heat pump is configured to warm or cool the building 102. In a second operating mode, the EMS may be configured to connect the heat pump to the energy storage device such as a battery, and the battery supplies electrical power to the heat pump. In yet another operating mode, the EMS may be configured to connect the heat pump to the external power source 108 such that the external power source 108 supplies electrical power to the heat pump, and further connects the energy storage device to the external power source 108 such that the external power source 108 charges the energy storage device. The thermal pump system 104, the EMS, the heat pump, and the energy storage device will be described in further detail below.

The external power source 108 may be any type of power source that is external to (e.g., not within) the thermal pump system 104 and provides energy (e.g., electrical power) to the thermal pump system 104. The dotted arrow within FIG. 1 shows electrical power being provided from the external power source 108 to the buildings 102 (e.g., the thermal pump system 104). In some variations, the external power source 108 may be associated with a utility company. For instance, the external power source 108 may be one or more power generation systems that are owned, managed, operated, and/or otherwise associated with the utility company. The power generation systems may be any system that is capable of generating power. For example, the power generation systems may be and/or include a power plant or another power provider. The power generation systems may provide power (e.g., AC power) to the buildings 102 and/or the thermal pump system 104. Additionally, and/or alternatively, the external power source 108 may be another type of system that provides electrical power to the thermal pump system 104 such as a system that provides solar power (e.g., a solar power provider system), a system that provides wind power (e.g., a wind power provider system), and/or other types of power provider systems. In some instances, the external power source 108 may be external to the thermal pump system 104, but might be within the same building 102 as the thermal pump system 104. For instance, the external power source 108 may be and/or include solar panels that are located at the building 102 (e.g., on the roof of the building 102) and configured to provide power to the thermal pump system 104 within the building 102.

The remote computing system 110 is a computing system that is configured to control an operating mode of the thermal pump system 104. For example, the remote computing system 110 may be configured to generate one or more instructions, and provide the instructions to the thermal pump system 104. Based on the instructions, the thermal pump system 104 may be configured to control how the heat pump is powered (e.g., powered based on using the external power source 108 and/or powered based on using the energy storage device). The control of the thermal pump system 104 using the remote computing system 110 will be described in further detail below.

The remote computing system 110 includes one or more computing devices, computing platforms, cloud computing platforms, systems, servers, and/or other apparatuses capable of performing tasks, functions, and/or other actions. In some variations, the remote computing system 110 may be implemented as engines, software functions, and/or applications. In other words, the functionalities of the remote computing system 110 may be implemented as software instructions stored in storage (e.g., memory) and executed by one or more processors. Additionally, and/or alternatively, the remote computing system 110 may be and/or include a cloud computing platform that executes cloud computing services.

It will be appreciated that the exemplary environment depicted in FIG. 1 is merely an example, and that the principles discussed herein may also be applicable to other situations-for example, including other types of institutions, organizations, devices, systems, and network configurations.

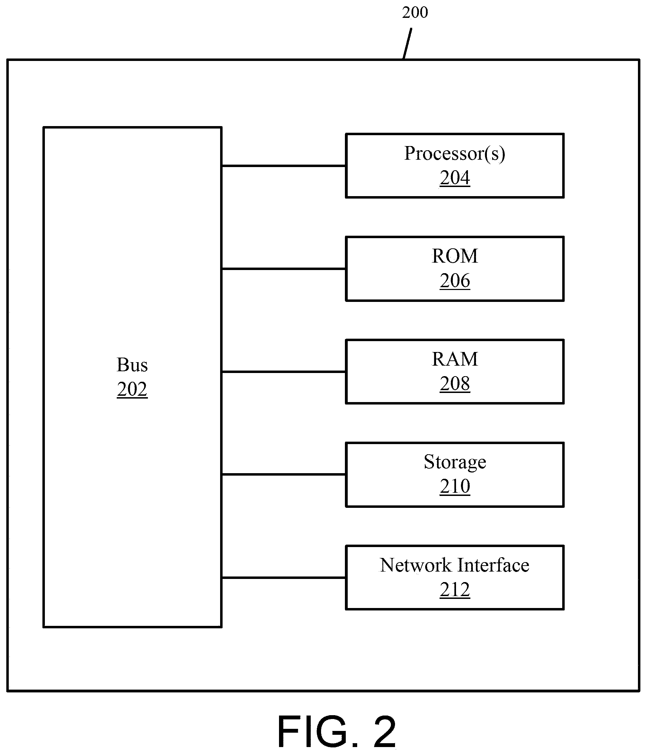

FIG. 2 is a block diagram of an exemplary system and/or device 200 within the environment 100. The device / system 200 includes a processor 204, such as a central processing unit (CPU), controller, and/or logic, that executes computer executable instructions for performing the functions, processes, and/or methods described herein. In some examples, the computer executable instructions are locally stored and accessed from a non-transitory computer readable medium, such as storage 210, which may be a hard drive or flash drive. Read Only Memory (ROM) 206 includes computer executable instructions for initializing the processor 204, while the random-access memory (RAM) 208 is the main memory for loading and processing instructions executed by the processor 204. The network interface 212 may connect to a wired network or cellular network and to a local area network or wide area network, such as the network 106. The device / system 200 may also include a bus 202 that connects the processor 204, ROM 206, RAM 208, storage 210, and/or the network interface 212. The components within the device / system 200 may use the bus 202 to communicate with each other. The components within the device / system 200 are merely exemplary and might not be inclusive of every component within the device / system 200. Additionally, and/or alternatively, the device / system 200 may further include components that might not be included within every entity of environment 100.

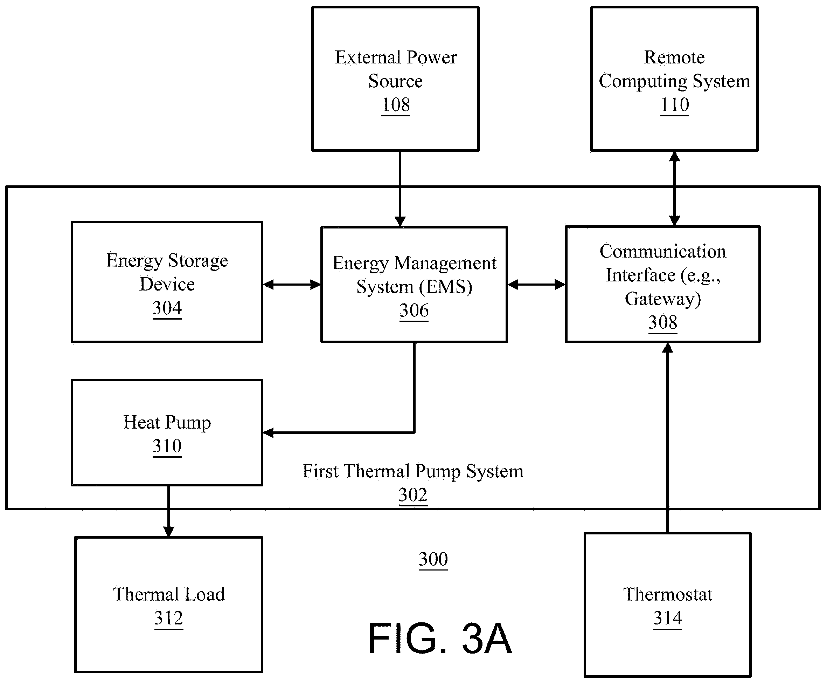

FIG. 3A is a simplified block diagram depicting an exemplary thermal pump system environment in accordance with one or more examples of the present application. For instance, the thermal pump system environment 300 shows the external power source 108 and the remote computing system 110 of environment 100, but also only shows a single thermal pump system (e.g., a first thermal pump system 302) for a single building 102. The first thermal pump system 302 includes an energy storage device 304, an energy management system (EMS) 306, one or more heat pumps 310, and a communication interface (e.g., a gateway) 308. The energy storage device 304 may be any type of device and/or system that is configured to store and/or discharge energy. For instance, the energy storage device 304 may be and/or include one or more batteries that are configured to store energy, and discharge energy to power the heat pump 310. Additionally, and/or alternatively, the energy storage device 304 may be and/or include super-capacitors and/or other energy storage devices. In some instances, based on an operating mode of the first thermal pump system 302, the external power source 108 may provide power to the energy storage device 304 to charge the energy storage device 304.

The EMS 306 may be configured to control aspects of the first thermal pump system 302, including controlling how the heat pump 310 is powered. For example, the EMS 306 may be configured to use one or more switches, relays, and/or other electrical elements to control whether the heat pump 310 is powered by the energy storage device 304 and/or the external power source 108. For instance, the EMS 306 may include one or more processors, memory, logic, circuit elements (e.g., electrical switches, relays, and/or contactors), and/or other elements that are configured to switch the heat pump 310 between being powered by the energy storage device 304, by the external power source 108, or by both the energy storage device 304 and the external power source 108. In some examples, the EMS 306 may include a charge controller that includes one or more relays. Using the relays, the EMS 306 may be configured to switch between the heat pump being powered by the energy storage device or being powered by the external power source 108.

The EMS 306 may further communicate with the external power source 108 and/or the remote computing system 110 via the communication interface 308. For instance, the remote computing system 110 may provide one or more requests for information and/or control instructions to the EMS 306 via the communication interface 308. The EMS 306 may be configured to respond to the requests for information, and provide the requested information back to the remote computing system 110 via the communication interface 308. Further, based on the control instructions, the EMS 306 may be configured to control the first thermal pump system 302 including the heat pump 310. For instance, in some examples, the control instructions may indicate for the heat pump 310 to be powered by the energy storage device 304. The EMS 306 may be configured to execute the control instructions such that the heat pump 310 is powered by the energy storage device 304. For example, based on the control instructions, the EMS 306 may be configured to use one or more switches, relays, and/or electrical contactors such that the energy storage device 304 supplies power to the heat pump 310. In other examples, the control instructions may indicate for the heat pump 310 to be powered by the external power source 108, and the EMS 306 may be configured to execute the control instructions such that the heat pump 310 is powered by the external power source 108. In yet other examples, the control instructions may indicate for the heat pump 310 to be powered by the external power source 108 and for the energy storage device 304 to be charged by the external power source 108. The EMS 306 may be configured to execute the control instructions such that the heat pump 310 is powered by the external power source 108 and the energy storage device 304 is charged by the external power source 108.

The heat pump 310 may be any type of device that transfers heat from one location to another location to support a thermal load (e.g., heating or cooling an environment, including, but not limited to, the building itself, a resource within the building such as water, air-to-air heating / cooling, and/or water-to-water heating / cooling). For instance, the heat pump 310 may provide heat and/or cool a thermal load 312. The thermal load 312 may be a space within the building that is heated or cooled using the heat pump 310.

The thermal pump system 302 may further include a communication interface 308 such as a gateway. The communication interface 308 may include one or more elements that facilitates communications between the thermal pump system 302 and one or more external entities such as the remote computing system 110 and/or the thermostat 314. For example, the communication interface 308 may include one or more network elements such as processors, memory, a gateway, and/or other elements that facilitate communications to the external entities. For instance, the communication interface 308 may receive information (e.g., control signals) from the remote computing system 110 and provide the information to the EMS 306 (e.g., a controller within the EMS 306). Furthermore, the communication interface 308 may receive information (e.g., the requested information such as a state of charge of the energy storage device 304) from the EMS 306 and provide the information to the remote computing system 110. Additionally, and/or alternatively, the communication 308 may be used to communicate with a thermostat 314, which provides a temperature measurement and/or reading of a space or location associated with the thermal load 312. For instance, the thermostat 314 may provide a temperature reading of a location within the building to the communication interface 308. The communication interface 308 may communicate this information to the remote computing system 110 and/or the EMS 306.

In some instances, the first thermal pump system 302 may include one or more processors, controllers, and/or memory. For instance, as mentioned above, the EMS 306 may include one or more controllers and/or memory. Additionally, and/or alternatively, the communication interface 308 may include the one or more processors, controllers, and/or memory. For example, the communication interface 308 (e.g., gateway) may include a gateway controller that controls how the heat pump 310 is powered. As such, in some variations, the EMS 306 may include circuit elements such as switches, relays and/or contactors that are controlled by the gateway controller. For instance, the gateway controller may provide control instructions to the EMS 306, such as a charge controller associated with the EMS 306, to switch how the heat pump 310 is being powered (e.g., powered by the external power source 108 or the energy storage device 304). Additionally, and/or alternatively, the one or more processors, controllers, and/or memory may be separate from both the communication interface 308 and the EMS 306. Additionally, and/or alternatively, the EMS 306 may be a circuit element that solely controls the energy storage device 304, and a separate element (e.g., a charge controller) may obtain control instructions / signals from the controller and be configured to switch how the heat pump 310 is being powered.

In some examples, the heat pump 310, the energy storage device 304, and the communication interface 308 (e.g., gateway) are collocated such that they share a rectifier and all operate in DC. The heat pump 310 may be composed of an indoor unit and an outdoor unit, heating or cooling to service a thermal load 312. The thermostat 314 specifies the target indoor temperature for the heat pump 310 to achieve. The heat pump 310 may be powered by the energy storage device 304 and/or by the external power source 108. The communication interface 308 is connected to a cloud service (e.g., the remote computing system 110) that optimizes the battery dispatch based on demand response signals and/or other electricity market data.

In some variations, aspects of the present disclosure provide a regulated thermal pump system (e.g., the first thermal pump system 302) for space heating and/or cooling comprising a heat pump 310, energy storage such as the energy storage device 304, an external power source 108, an energy management system 306, and a gateway controller (e.g., a gateway controller that is within the communication interface 308). The energy storage is proximal or in the same housing as the heat pump 310, which is shown in FIG. 3A. The gateway controller is configured to control the energy storage charging and discharging in order to shave peak usage, reduce overall energy cost, and/or to provide energy during an external power interruption.

In some instances, aspects of the present disclosure allow for the heating load (e.g., thermal load 312) to be shifted from on-peak hours to off-peak hours, with little or no impact to heat delivered and/or user comfort. This may reduce the need for building new power plants and transmission lines and may reduce curtailment of solar assets - reducing electricity rates for consumers and increasing the utilization of renewable energy sources. In some examples, aspects of the present disclosure co-locate the energy storage device 304 and the heating equipment (e.g., the heat pump 310). In some instances, the energy storage device 304 and the heating equipment may share a rectifier. In comparison to utility-scale or standalone on-site storage, aspects of the present disclosure may have at least the following advantages: no marginal cost of installation for consumers already installing a heat pump, no line loss, less power conversion losses, because both energy storage and heating equipment operate in DC, and/or reduced equipment cost, because of not having an inverter.

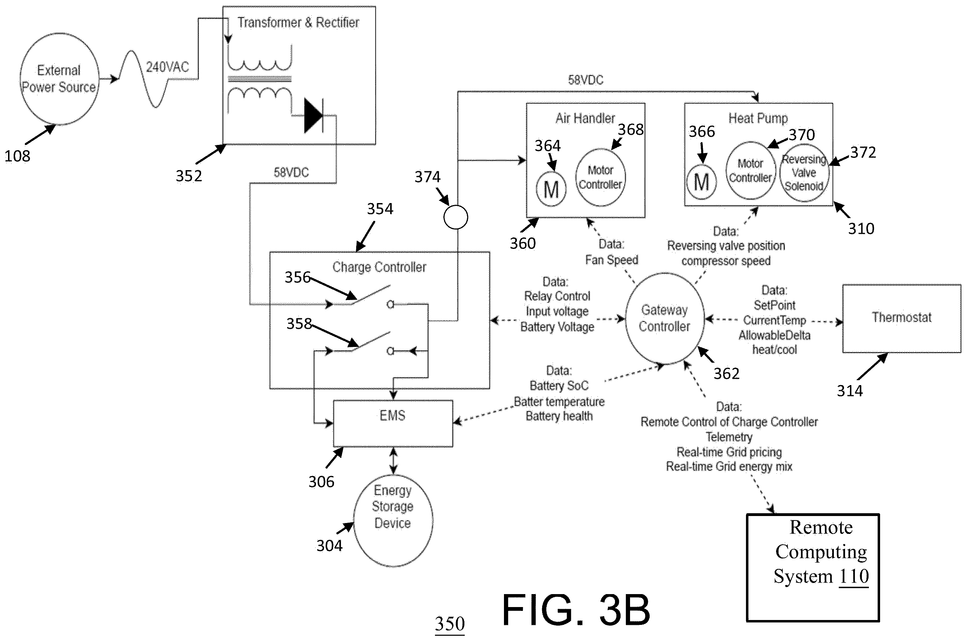

FIG. 3B is a simplified circuit diagram 350 of a thermal pump system in accordance with one or more examples of the present application. For example, the external power source 108 (e.g., a utility power plant that provides AC power) provides AC power (e.g., 240 Volts AC (VAC)) to the thermal pump system. The thermal pump system includes a transformer and rectifier 352 that receives the AC power from the external power source 108. The transformer and rectifier 352 is configured to transform the AC power to DC power (e.g., 240 VAC to 58 Volts DC (VDC), and provide the DC power to the charge controller 354. As such, the transformer and rectifier 352 is in series with both the heat pump 310 and the energy storage device 304. The charge controller 354 includes two relays 356 and 358 that are configured to switch how the heat pump 310 is being supplied power. As mentioned above, in some instances, other circuit elements such as switches and/or contactors may be used. In other words, in some examples, the charge controller 354 may include other circuit elements that are configured to switch how the heat pump 310 is being supplied power.

The charge controller 354 is electrically connected to the EMS 306, the air handler 360, and the heat pump 310. The EMS 306 is electrically connected to the energy storage device 304 such as a battery (e.g., a lithium-iron-phosphate battery). As mentioned previously, in some instances, the EMS 306 may include the charge controller 354, but in other instances and as shown in FIG. 3B, the EMS 306 is separate from the charge controller 354. The EMS 306 is configured to determine characteristics of the energy storage device such as the state of charge (SoC) of the energy storage device, and provide the characteristics to the remote computing system 110.

The air handler 360 and the heat pump 310 include one or more motors 364, 366 and one or more motor controllers 368, 370. Further, the heat pump 310 may include a reversing valve solenoid 372. The charge controller 354 provides power (e.g., 58 VDC) to the air handler 360 and the heat pump 310. The gateway controller 362 is configured to communicate with the other entities within the thermal pump system as well as additional entities such as the thermostat 314 and the remote computing system 110. For instance, the gateway controller 362 provides data to the other entities including controlling the entities of the thermal pump system. For instance, the gateway controller 362 controls the fan speed of the air handler 360 and the reversing valve position as well as compressor speed of the heat pump 310. Further, the gateway controller 362 communicates with the thermostat 314 such as transmitting and/or receiving data including, but not limited to, the set point, the current temperature, and the allowable delta heat/cool. The gateway controller 362 further communicates with the EMS 306 including receiving data including, but not limited to, the SoC of the energy storage device and/or the temperature / health of the energy storage device. Furthermore, the gateway controller 362 provides control instructions to the charge controller such as control instructions for the relays 356 and 358. Based on the control instructions, the charge controller 354 may electrically connect the energy storage device 304 to the heat pump 310 and the air handler 360 and/or the external power source 108 to the heat pump 310 and the air handler 360. As such, based on the control instructions (e.g., from the remote computing system 110), the gateway controller 362 controls how the heat pump 310 is being powered. Additionally, and/or alternatively, the gateway controller 362 may communicate with the charge controller 354 to receive and/or transmit data associated with the input voltage and/or energy storage device voltage.

The gateway controller 362 may further communicate with the remote computing system 110 such as communicating data including, but not limited to, remote control of the charge controller 354 (e.g., the remote computing system 110 may provide the control instructions), telemetry, real-time grid pricing, and/or real-time grid energy mix.

As mentioned above, in some instances and as shown in FIG. 3B, the thermal pump system may include a gateway controller 362 that is within the communication interface 308. In other instances, the EMS 306 may include a controller that performs the functionality of the gateway controller 362. In yet other instances, a controller that is separate from the communication interface 308 and the EMS 306 (e.g., not within the communication interface 308 and the EMS 306) may perform the functionalities of the gateway controller 362.

In some examples, an electrical measurement along an electrical connection between the charge controller 354 and the air handler 360 and/or as the heat pump 310 may be obtained. For instance, an electrical measurement (e.g., a current measurement) may be obtained along the electrical connection at the location 374 (e.g., the location 374 may include a current and/or voltage measurement device). The electrical measurement that is obtained at location 374 along the electrical connection may be provided to one or more entities the circuit diagram 350 such as the charge controller 354, the EMS 306, and/or the gateway controller 362. Then, as will be explained in further detail below, the electrical measurement that is obtained at location 374 may be used to determine the operating modes for the thermal pump system.

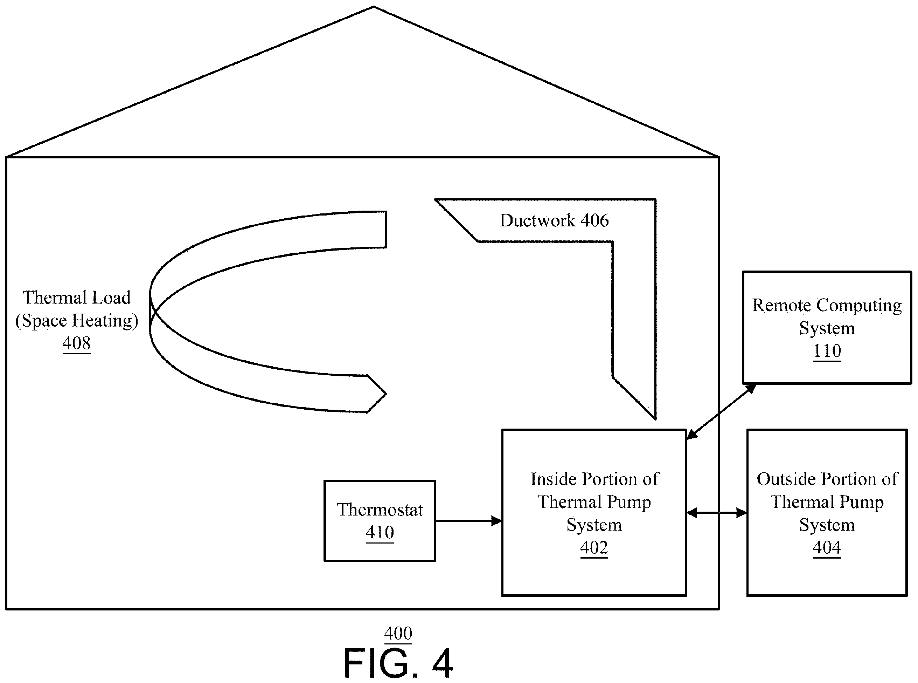

FIG. 4 is a simplified block diagram depicting a thermal pump system within a building in accordance with one or more examples of the present application. For instance, the block diagram 400 shows a building environment with a thermal pump system (e.g., the thermal pump system 104 of FIG. 1 and/or of FIG. 3A). The thermal pump system includes an inside portion 402 and an outside portion 404. The inside portion 402 may be within the interior of the building and the outside portion 404 may be located outside of the building. The thermal pump system may include the entities described in FIG. 3A such as the communication interface 308. Using the communication interface 308, which is shown to be located within the inside portion 402, the thermal pump system communicates with the remote computing system 110. Furthermore, using the communication interface 308, the thermal pump system communicates with the thermostat 410, such as having the thermostat 410 provide temperature readings or measurements of an interior region of the building. The outside portion 404 may include a section of the heat pump (e.g., the heat pump 310) and the interior portion 402 may include the communication interface 308, the energy storage device 304, the EMS 306, a heat pump air handler, and/or another section of the heat pump (e.g., the heat pump 310 may include an interior section and an exterior section). Using the ductwork 406, the thermal pump system may provide climate control to the building. For instance, the thermal pump system may allow heating or cooling of the thermal load 408 (e.g., space heating).

In some instances, the block diagram 400 shows an example usage of the thermal pump system of FIGs. 1 and/or 3A. For instance, the thermal pump system may include a ducted air-to-air heat pump (e.g., heat pump 310) that provides space heating and cooling to a building (e.g., a residential home). The inside portion 402 may include the indoor coil of the heat pump, the energy storage device, and a blower motor and/or fan for distributing the air through the building's ducts 406. The outside portion 404 may include the compressor, condenser coil, and another fan. Central air systems are typically 220+ volts and hard-wired directly into a building's electrical system, and the thermal pump system may operate the same way (e.g., no outlet is involved and the thermal pump system may be connected directly into the building's electrical system). In some variations, an on-site thermostat 410 allows the household to specify their temperature settings, but the energy storage device may be controlled off-site to charge and discharge at optimal times for the grid, delivering grid services without compromising the household's comfort.

In some examples, the energy storage device 304 may be located within or outside of the housing for the heat pump 310. For example, a single structure (e.g., a structure within the first thermal pump system 302) may house the heat pump 310 as well as the energy storage device 304. In other examples, separate structures may house the heat pump 310 as well as the energy storage device 304. Additionally, and/or alternatively, in some examples, the energy storage device 304 may be located within the inside portion 402. In other examples, the energy storage device 304 may be located within the outside portion 404.

In some variations, the thermal pump system 302 may operate on AC power. In other variations, the thermal pump system 302 may operate on DC power (e.g., using a DC bus). In some instances, the thermal pump system 302 may include an air handler such as a heating, ventilation, and air conditioning (HVAC) fan. For example, as shown in FIG. 3B, the thermal pump system 302 may include an air handler 360 (e.g., an air handler 360 with a motor 364 and a motor controller 368 that is within the inside portion of the thermal pump system 402). In other instances, the thermal pump system 302 might not include an air handler. In some examples, the thermal load 312 may be any combination of water heating and/or cooling, space heating and/or cooling, or any other residential, commercial, or industrial thermal load.

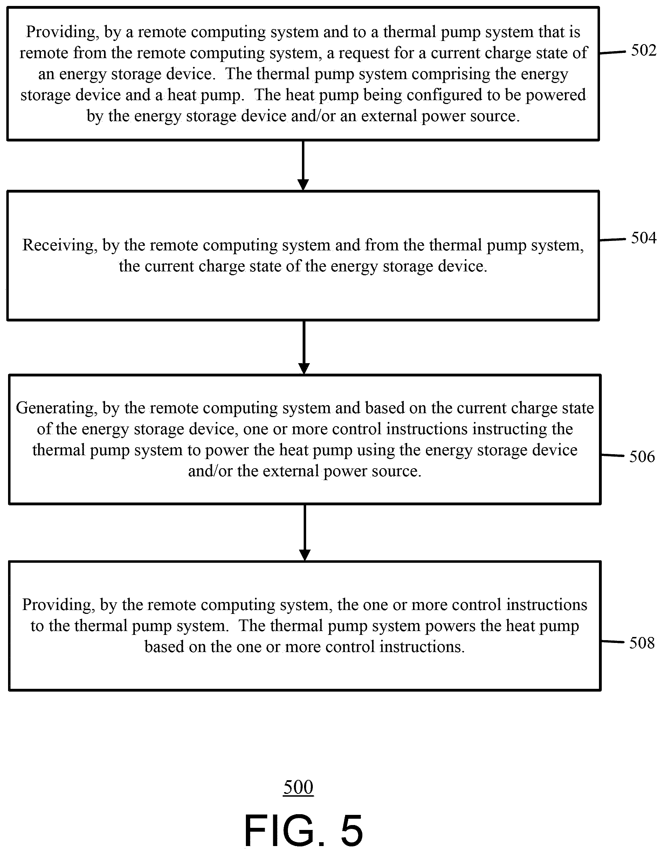

FIG. 5 is an exemplary process for controlling a thermal pump system using a remote computing system in accordance with one or more examples of the present application. The process 500 may be performed by the remote computing system 110 described in the previous FIGs. However, it will be recognized that any of the following blocks may be performed in any suitable order and that the process 500 may be performed in any suitable environment. The descriptions, illustrations, and processes of FIG. 5 are merely exemplary and the process 500 may use other descriptions, illustrations, and processes.

At block 502, the remote computing system 110 provides, to a thermal pump system (e.g., the thermal pump system 302) that is remote from the remote computing system 110, a request for a current charge state of an energy storage device (e.g., the energy storage device 304). For example, the remote computing system 110 may provide a request for an electrical measurement (e.g., a current charge state or a state of charge (SoC) of the energy storage device). For instance, to determine whether to power the heat pump (e.g., heat pump 310) using the energy storage device or the external power source 108, the remote computing system 110 may seek to use the current charge state of the energy storage device and may thus provide a request for a current charge state of an energy storage device. The remote computing system 110 may control the powering of the heat pump for a variety of buildings 102 (e.g., multiple different single-residential homes and/or commercial buildings), and may perform process 500 to control the powering of the heat pump for numerous different buildings 102.

In some examples, block 502 as well as process 500 may be performed based on a demand response signal. For example, a user (e.g., a user associated with the thermal pump system 302) and/or another entity (e.g., a relevant electrical system operator and/or distributed energy resource aggregator) may provide a demand response signal to the remote computing system 110. The remote computing system 110 may perform process 500 and provide a request for a current charge state of an energy storage device.

Additionally, and/or alternatively, prior to, in parallel, or subsequent to providing the request for a current charge state of the energy storage device, the remote computing system 110 may check whether there is currently a "grid event" or an external power disruption. For instance, in some examples, the "grid event" may be a demand response signal from utilities and/or system operators (e.g., the remote computing system 110 may obtain information indicating the grid event from the external power source 108 and/or a computing entity associated with the external power source 108). For example, the external power source 108 may be associated with the Independent System Operator (ISO) for New England (NE) and/or California's Public Utilities Commission (CPUC). The ISO NE may provide a grid event such as the ISO-NE's Connected Solutions Daily Dispatch program to the remote computing system 110. Additionally, and/or alternatively, CPUC may provide a grid event such as the CPUUC Emergency Load Reduction Program (ELRP) to the remote computing system 110. Additionally, and/or alternatively, the remote computing system 110 may receive a notification indicating a grid event from a distributed energy resource aggregator (e.g., Voltus, CPower, and/or Leap).

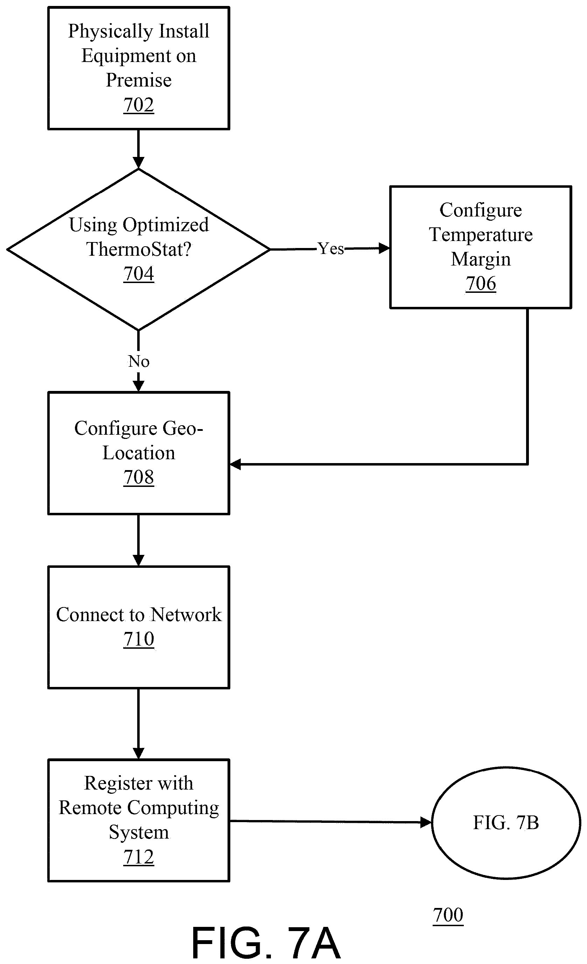

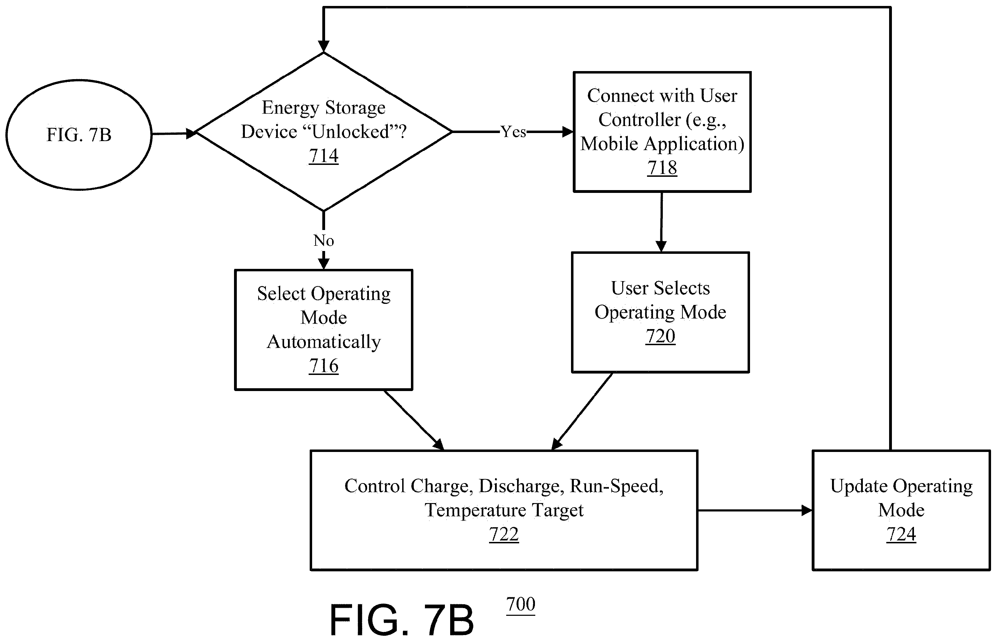

In some instances, the remote computing system 110 may determine whether there is currently a "grid event" or an external power disruption based on geolocation information that is obtained during the installation phase. For example, as mentioned below in FIG. 7 (e.g., block 708), the remote computing system 110 may obtain geographical location information indicating a geographical location of the thermal pump system 104 (e.g., from the installer, household, or by automated methods such as GPS). The remote computing system 110 may use the geographical location information of the thermal pump system 104 to determine whether there is currently a "grid event" or an external power disruption.

In some examples, the remote computing system 110 may receive information indicating an external power disruption. For example, the external power source 108 and/or another entity associated with the external power source 108 may provide information indicating that the external power source 108 or another power source that powers the buildings 102 is dealing with a power disruption (e.g., power line failures due to severe weather). Additionally, and/or alternatively, the EMS 306 may detect a power disruption. For instance, the EMS 306 may monitor the input voltage (e.g., the input voltage that is being provided from the transformer and rectifier 352 to the charge controller 354 of FIG. 3B) and based on comparing the input voltage with one or more thresholds, may detect a power disruption. The EMS 306 may provide information indicating the power disruption to the remote computing system 110 via the communication interface 308. Then, as mentioned above, the remote computing system 110 may perform process 500 including block 502.

At block 504, the remote computing system 110 receives, from the thermal pump system, the current charge state of the energy storage device. For instance, based on the request, the thermal pump system (e.g., the EMS 306 of the thermal pump system 302) may determine the electrical measurement (e.g., the current charge state) of the energy storage device (e.g., the energy storage device 304). Then, using a gateway (e.g., the communication interface 308), the thermal pump system may provide the current charge state of the energy storage device to the remote computing system 110.

At block 506, the remote computing system 110 generates, based on the current charge state of the energy storage device, one or more control instructions instructing the thermal pump system to power the heat pump using the energy storage device and/or the external power source 108. For instance, based on the electrical measurement (e.g., current charge state) of the energy storage device (e.g., based on comparing the current charge state of the energy storage device with one or more charging thresholds), the remote computing system 110 may generate control instructions indicating whether the energy storage device and/or the external power source 108 are used to power the heat pump. For instance, if the charge state is above a first threshold (e.g., if the charge state is 5%), the remote computing system 110 may generate control instructions indicating for the energy storage device to provide power to the heat pump. If the charge state is below the first threshold, the remote computing system 110 may generate control instructions indicating for the external power source 108 to provide power to the heat pump.

Additionally, and/or alternatively, the remote computing system 110 may generate the control instructions based on whether there is currently a "grid event" or an external power disruption. For instance, the remote computing system 110 may generate control instructions indicating for the energy storage device to provide power to the heat pump based on the charge state being above the first threshold and an indication that there is currently a "grid event" or an external power disruption. Otherwise, if there is not currently a "grid event" or an external power disruption, the remote computing system 110 may generate control instructions indicating for the external power source 108 to provide power to the heat pump. Additionally, and/or alternatively, if there is not currently a "grid event" or an external power disruption, the remote computing system 110 may check the current charge state of the energy storage device and determine whether to charge the energy storage device. For instance, based on there not being a "grid event" or an external power disruption and the current charge state of the energy storage device being below a second threshold, the remote computing system 110 generate control instructions indicating for the external power source 108 to charge the energy storage device.

At block 508, the remote computing system 110 provides the one or more control instructions to the thermal pump system. The thermal pump system powers the heat pump based on the one or more control instructions. For example, based on the control instructions indicating for the external power source 108 to provide power to the heat pump, the thermal pump system (e.g., the EMS 306) may be configured to provide power from the external power source 108 to the heat pump. For instance, one or more switches may be actuated such that power from the external power source 108 is provided to the heat pump. Based on the control instructions indicating for the energy storage device to provide power to the heat pump, the thermal pump system (e.g., the EMS 306) may be configured to provide power from the energy storage device to the heat pump.

In some examples, the one or more control instructions may be instructions to control the heat pump based on thermostat operating modes from an optimized thermostat. For instance, as described below in FIG. 7 (e.g., blocks 704 and 706), during the installation phase, the remote computing system 110 may receive a notification indicating whether an optimized thermostat is installed in the building 102. An optimized thermostat allows multiple thermostat operating modes such as a regular thermostat operating mode and a specialized thermostat operating mode based on the "grid event" and/or the power disruption. For example, the remote computing system 110 may generate control instructions that are provided to the thermal pump system indicating the "grid event" and/or the power disruption. Based on the control instructions, the thermal pump system and/or the optimized thermostat may operate in the specialized thermostat operating mode. For instance, under normal conditions (e.g., in a regular thermostat operating mode), the thermal pump system 104 may maintain the temperature to be within one degree of a set-point. But, based on the control instructions, the thermal pump system 104 may maintain the temperature within another offset (e.g., four degrees) of the set point.

In some instances, the one or more control instructions may be instructions to control the heat pump based on weather conditions. For instance, as mentioned below in FIG. 7 (e.g., block 708), the remote computing system 110 may obtain geographical location information indicating a geographical location of the thermal pump system 104 (e.g., from the installer, household, or by automated methods such as GPS). Using the geographical location information, the remote computing system 110 may determine the weather conditions of the geographical area associated with the thermal pump system 104 (e.g., whether the area is encountering severe weather). Based on the determined weather conditions and/or the immediacy of a "grid event" (e.g., based on the demand response signal), the remote computing system 110 may provide control instructions indicating control parameters for controlling the heat pump, including pre-heating or pre-cooling the load.

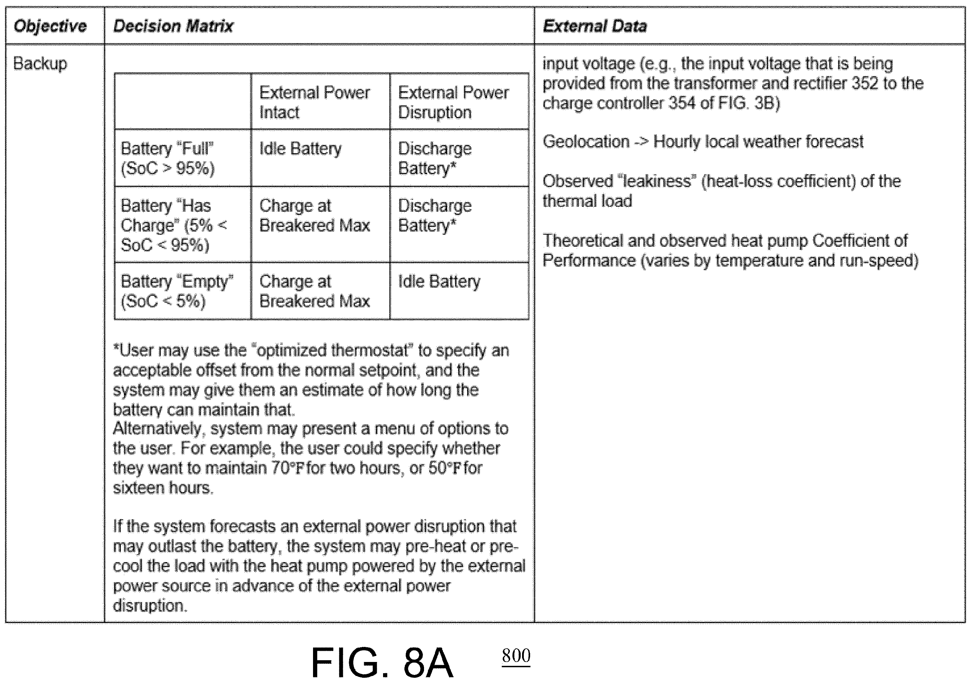

For instance, the remote computing system 110 may use weather conditions in addition to and/or as an alternative to the load's observed heat-loss coefficient and/or heat pump's coefficient of performance to determine (e.g., calculate) the energy required to maintain the thermal load at a given temperature for a given time duration. For example, the remote computing system 110 may use the weather conditions, the thermal load's observed heat-loss coefficient (e.g., the heat-loss coefficient of the thermal load 312), and/or the heat pump's coefficient of performance (e.g., the coefficient of performance of the heat pump 310) to determine an energy required to maintain the thermal load (e.g., thermal load 312) at a given temperature for a set amount of time. This may be compared to the charge state of the energy storage device to determine how long the system can maintain a given temperature when powered by the energy storage device. For example, the remote computing system 110 may then compare this energy required to the charge state of the energy storage device (e.g., energy storage device 304) to determine how long the thermal pump system (e.g., the first thermal pump system 302) may be able to maintain / sustain the given temperature when powered by the energy storage device (e.g., a duration of time amount that the energy storage device may be able to maintain the given temperature). This may then be compared to the relevant length of time for each objective (e.g., the objectives described by FIGs. 8A-8D such as demand response window, on-peak hours, and so on), the normal set-point, and the acceptable offset specified with the optimized thermostat (e.g., the thermostat 314, which may be an optimized thermostat). For instance, the remote computing system 110 may compare the duration of time amount with one or more time durations associated with the objectives, and based on the comparison as well as the normal set-point of the thermostat (e.g., the regular thermostat operating mode) and the acceptable offset specified by the specialized thermostat operating mode, generate the control instructions for controlling the heat pump. As such, using the control instructions, the thermal heat pump system 102 may utilize the energy storage device and heat pump to respond to objectives in a manner that minimizes deviation from the target temperature, and is subject to the acceptable offset.

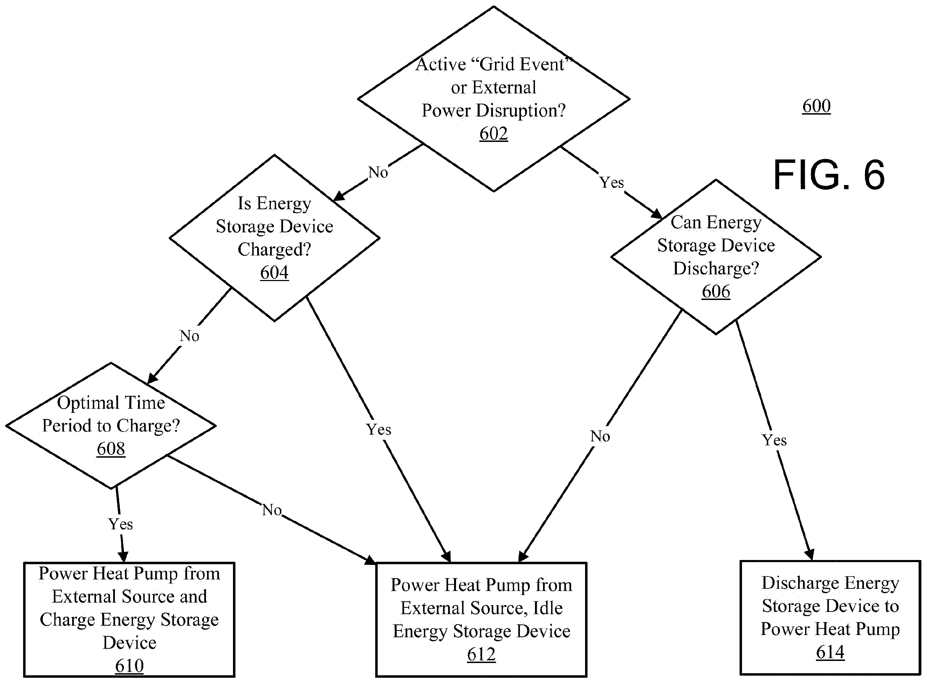

FIG. 6 shows an exemplary flowchart for optimizing the control of the thermal pump system in accordance with one or more examples of the present application. In some examples, FIG. 6 provides an exemplary flowchart 600 that describes an example of performing blocks 506 and 508 of process 500. In other words, the remote computing system 110 may perform one or more blocks of FIG. 6. In other examples, a controller within the thermal pump system 104 (e.g., a gateway controller and/or the EMS 306) may perform one or more blocks of FIG. 6. To put it another way, in some examples, the remote computing system 110 may perform blocks 602-614, and generate control instructions to remotely control the thermal pump system 104. In other examples, the thermal pump system 104 may perform this control locally (e.g., by using a controller within the thermal pump system 104). Below, the remote control of the thermal pump system 104 will be described initially and following, the performance of flowchart 600 will be described using a controller within the thermal pump system 104.

In operation, at block 602, the remote computing system 110 determines whether there is an active "grid event" or external power disruption. If yes, flowchart 600 proceeds to block 606 and the remote computing system 110 determines whether the energy storage device (e.g., battery) can be discharged (e.g., based on comparing the current charge of the energy storage device with one or more thresholds). If yes, flowchart 600 proceeds to block 614, and the remote computing system 110 generates control instructions indicating to discharge the energy storage device to power the heat pump. If no, flowchart 600 proceeds to block 612, and the remote computing system 110 generates control instructions indicating to power the heat pump from the external power source 108 and idle the energy storage device.

Returning to block 602, if no, the flowchart 600 proceeds to block 604, and the remote computing system 110 determines whether the energy storage device (e.g., battery) is charged (e.g., based on comparing the current charge of the energy storage device with one or more thresholds). If yes, flowchart 600 proceeds to block 612, and the remote computing system 110 generates control instructions indicating to power the heat pump from the external power source 108 and idle the energy storage device. If no, flowchart 600 proceeds to block 608. At block 608, the remote computing system 110 determines whether it is an optimal time period to charge the energy storage device (e.g., based on information from the thermal pump system such as a utility rate schedule of the thermal pump system, based on energy demand forecasts, and/or based on one or more energy models). For instance, day ahead and/or real time pricing may be published by grid operators (e.g., by the external power source 108). The remote computing system 110 may obtain information indicating the day ahead and/or real time pricing (e.g., either directly or indirectly). Additionally, and/or alternatively, the external power source 108 may provide information indicating typical generation-mix or real-time generation-mix, and the remote computing system 110 may obtain this information. Based on the obtained information (e.g., the information indicating the typical generation-mix, the real-time generation-mix, and/or the day ahead and/or real time pricing), the remote computing system 110 may determine whether it is an optimal time period to charge the energy storage device.

If no, flowchart 600 proceeds to block 612, and the remote computing system 110 generates control instructions indicating to power the heat pump from the external power source 108 and idle the energy storage device. If yes, flowchart 600 proceeds to block 610, and the remote computing system 110 generates control instructions to power the heat pump from the external power source 108 and charge the energy storage device.

In other words, flowchart 600 shows a representative decision tree for choosing whether to run the heat pump from the building's electrical system (e.g., an on-the-grid electrical system) or the energy storage device. The remote computing system 110 monitors for a demand response signal (e.g., from the relevant electrical system operator or distributed energy resource aggregator). If the remote computing system 110 receives a demand response signal, the remote computing system 110 checks the charge state of the energy storage device. If the energy storage device has sufficient charge to discharge without compromising the long-term health of the energy storage device (e.g., >5%), then the remote computing system 110 switches to run the heat pump from the energy storage device until the earlier of (a) the energy storage device reaching a critical point of discharge (e.g., 5%), or (b) the end of the demand response event. If the energy storage device does not have sufficient charge at the start of the event, the remote computing system 110 controls the heat pump to remain powered by the building's electrical system. If the energy storage device runs out before the demand response event concludes, the remote computing system 110 controls the heat pump to switch back to the house's electrical system. When the demand response event is over, the remote computing system 110 seeks to recharge the battery while running the heat pump from the building's electrical system. The battery recharge is throttled by the contemporaneous heat pump power draw so as not to overload the circuit. The energy storage device recharge may be timed to lower price periods (e.g. "off-peak") or lower carbon periods (e.g., windows where the marginal generation on the local grid is renewables or nuclear).

The remote computing system 110 may also manage energy storage devices to provide other grid services such as frequency response. For instance, the frequency response may be an existing program to curtail loads with very short notice. The remote computing system 110 may subscribe to the messages from these various programs that indicate the frequency response, and manage the energy storage devices based on the frequency response.

As mentioned above, in some examples, flowchart 600 may be performed by a controller (e.g., the gateway controller and/or the EMS 306) within the thermal pump system 104, and the thermal pump system 104 may control itself locally. For example, at block 602, the controller may receive information indicating active grid events and/or external power disruption (e.g., from the external power sources 108 and/or the remote computing system 110). Subsequently, the controller may check the state of charge of the energy storage device (e.g., perform blocks 604 and/or 606) as well as determine whether it is an optimal time period of charge (e.g., perform block 608). Based on the determinations, the controller may control the heat pump locally (e.g., perform blocks 610-614). For instance, the controller may determine to power the heat pump from the external power source 108 and charge the energy storage device (e.g., perform block 610), power the heat pump from the external power source 108 and idle the energy storage device (e.g., perform block 612), or discharge the energy storage device to power the heat pump (e.g., perform block 614). As such, the controller within the thermal pump system 104 may control the heat pump that is also within the thermal pump system 104.

In other words, one or more functionalities for the remote computing system 110 described above may be performed by the controller of the thermal pump system 104. For instance, the controller may perform one or more blocks of FIGs. 5, 6, and/or 7. For example, referring to FIG. 6, the controller may obtain information indicating an active "grid event" and/or external power disruption. For instance, the controller may obtain information indicating whether there is an active "grid event" and/or external power disruption from the external power source 108 via the remote computing system 110. As such, in such examples, the remote computing system 110 might not provide the control instructions for controlling the heat pump of the thermal pump system 104. Instead, the remote computing system 110 may provide information merely indicating whether there is an active "grid event" and/or external power disruption. Additionally, and/or alternatively, the controller may obtain this information directly from the external power source 108.

In some examples, the usage of an electrical measurement (e.g., the SoC of the energy storage device 304) may be replaced and/or supplemented with an electrical measurement that is obtained at the location 374. For example, the remote computing system 110 and/or the controller of the thermal pump system 104 may obtain (e.g., receive) the electrical measurement that is obtained at the location 374. Then, based on the electrical measurement, the remote computing system 110 and/or the controller of the thermal pump system 104 may determine one or more operating modes for operating the thermal pump system. For instance, as mentioned above, in a first operating mode, the controller and/or the remote computing system 110 may be configured to connect the heat pump 310 to the external power source 108 such that the external power source 108 supplies electrical power to the heat pump 310. In a second operating mode, the controller and/or the remote computing system 110 may be configured to connect the heat pump 310 to the energy storage device 304, and the energy storage device 304 supplies electrical power to the heat pump 310. In yet another operating mode, the controller and/or the remote computing system 110 may be configured to connect the heat pump 310 to the external power source 108 such that the external power source 108 supplies electrical power to the heat pump 310, and further connects the energy storage device to the external power source 108 such that the external power source 108 charges the energy storage device.

While operating in one or more operating modes, in some instances, the electrical connection may have a fault such that insufficient power is arriving at the heat pump 310. For example, in the second operating mode, the heat pump 310 may be connected to the energy storage device 304 and the energy storage device 304 supplies electrical power to the heat pump 310. Based on a faulty connection, insufficient power from the energy storage device 304 may be provided to the heat pump 310, and thus the heat pump 310 may be unable to function properly. As such, the remote computing system 110 and/or the controller of the thermal pump system 104 may obtain an electrical measurement at a location (e.g., the location 374) between the charge controller 354 and the heat pump 310. While the location 374 is shown before the air handler 360, in some instances, the location 374 of the obtained electrical measurement may be after the air handler 360. In some instances, the location 374 may also be placed between the charge controller 354 and the EMS 306, between the EMS 306 and the energy storage device 304, between the transformer and rectifier 352 and the charge controller 354 and/or along another location within the circuit diagram 350. Based on the electrical measurement, the remote computing system 110 and/or the controller of the thermal pump system 104 may determine one or more operating modes for operating the thermal pump system, and use the one or more operating modes to control how the heat pump 310 is powered (e.g., powered based on using the external power source 108 and/or powered based on using the energy storage device).

For instance, in some variations, in addition to obtaining the SoC of the energy storage device 304, the controller and/or the remote computing system 110 may obtain the electrical measurement (e.g., at the location 374 of the circuit diagram 350). The controller and/or the remote computing system 110 may determine to operate the thermal pump system in one of the operating modes based on the SoC. Subsequently, the controller and/or the remote computing system 110 may compare the obtained electrical measurement with one or more operating thresholds (e.g., a current threshold indicating an amount of current necessary to operate the heat pump 310). Based on the comparison (e.g., an error determination), the controller and/or the remote computing system 110 may determine to operate the thermal pump system in another operating mode. For example, based on the SoC, the controller and/or the remote computing system 110 may seek to operate the thermal pump system in the second operating mode (e.g., the energy storage device 304 supplies electrical power to the heat pump 310). Based on the obtained electrical measurement indicating a current that is below the operating threshold (e.g., insufficient power is arriving at the heat pump 310, which may be caused by a faulty connection), the controller and/or the remote computing system 110 may determine to switch the operating mode to another operating mode (e.g., the first operating mode where the external power source 108 supplies electrical power to the heat pump 310).

Additionally, and/or alternatively, the electrical measurement may replace the SoC in determining the operating mode to operate the thermal pump system. For example, initially, the thermal pump system may operate in a first operating mode. Based on the electrical measurement (e.g., at the location 374 of the circuit diagram 350), the controller and/or the remote computing system 110 may determine insufficient power is arriving at the heat pump 310 (e.g., based on comparing the electrical measurement with the operating threshold). Based on the determination, the controller and/or the remote computing system 110 may determine to operate the thermal pump system in another operating mode (e.g., in the second operating mode where the energy storage device 304 supplies electrical power to the heat pump 310). This may also be reversed. For instance, based on operating in the second operating mode, the controller and/or the remote computing system 110 may determine insufficient power is arriving at the heat pump 310, and may determine to operate the thermal pump system in another operating mode (e.g., in the first operating mode).

In some instances, the controller may determine whether there is currently a "grid event" or an external power disruption based on geolocation information that is obtained during the installation phase. For example, the controller may obtain information indicating a geographical location of the thermal pump system 104, and may determine whether there is a "grid event" or an external power disruption based on the geographical location. Additionally, and/or alternatively, the controller may determine whether there is a power disruption either based on the EMS 306 and/or may obtain information from the external power source 108 (e.g., either directly and/or indirectly via the remote computing system 110) indicating the power disruption.

Based on the information indicating the active "grid event" and/or the power disruption, the controller may perform blocks 604-614. For instance, the controller may determine whether the energy storage device may be charged (e.g., block 604) and/or may be discharged (e.g., block 606). Further, the controller may determine whether it is an optimal time period to charge (e.g., block 608). Based on performing blocks 604-608, the controller may determine an operating mode for powering the heat pump and/or charging the energy storage device 304 (e.g., blocks 610-614). For instance, the controller may power the heat pump from the external power source 108 and charge the energy storage device 304 (e.g., block 610), power the heat pump from the external power source 108 and idle the energy storage device (e.g., block 612), and/or discharge the energy storage device 304 to power the heat pump.

FIGs. 7A and 7B show an exemplary flowchart 700 for installing and configuring the thermal pump system in accordance with one or more examples of the present application. For instance, referring to FIG. 7A, at block 702, the equipment is physically installed on the premise (e.g., the thermal pump system 104 is installed within a building 102). For example, a qualified HVAC contractor may install the thermal pump system 104 on-site, such as by hard-wiring it into the electrical system of the building 102. In some instances, the thermal pump system 104 may be a drop-in replacement for a standard heat pump, so there would be no difference in installation except the extra size and weight of the energy storage device and the communication interface (e.g., a gateway controller).

Block 704 checks whether the building 102 uses an optimized thermostat (e.g., a specialized thermostat). For example, block 704 refers to an optimized thermostat that allows the user to specify upper and lower bounds of their comfortable temperature range, with the equipment automatically running if those are breached, and additional upper and lower bounds of a temperature range that may be used in during a grid event and/or a power disruption. For example, an optimized thermostat such as a heat pump thermostat may operate in two or more thermostat operating modes (e.g., a regular thermostat operating mode and a specialized thermostat operating mode that is performed based on a grid event and/or a power disruption). Additionally, and/or alternatively, pump thermostats (e.g., the optimized thermostat) also control the refrigerant flow for extra efficiency - in contrast to standard thermostats (e.g., regular and/or "smart thermostats"), which have less control by virtue of their wiring. In some instances, an installer may indicate whether they are installing an optimized thermostat. In other words, in some embodiments, a standardized thermostat is installed at the building 102 and thus, flowchart 700 moves to block 708. In other embodiments, an optimized thermostat is installed and flowchart 700 moves to block 706 first prior to moving to block 708.

At block 706, the temperature margin(s) and/or an offset may be configured. For instance, the household may specify not only their comfortable temperature range and/or offset, but also a temperature range and/or offset to be used in the event of a grid event and/or power disruption. For instance, under normal conditions, the thermal pump system 104 may maintain the temperature to be within one degree of a set-point. But, for the duration of a grid event and/or external power disruption, the thermal pump system 104 may maintain the temperature within another offset (e.g., four degrees) of the set point. The thermal pump system 104 may also maintain the temperature using an absolute minimum / maximum rather than an offset. In other words, the controller of the thermal pump system 104 may receive information of a temperature range and/or offset indicated by the household.

If no, flowchart 700 moves to block 708 and configuring the geo-location. For instance, the installer or household specifies the location of the unit, which may be useful later for responding to weather conditions and/or for understanding which external power provider the building 102 is utilizing. This may be helpful in responding to the correct grid events. The controller of the thermal pump system 104 may receive the geo-location information from the installer or household indicating the geographical location of the thermal pump system. Additionally, and/or alternatively, the controller of the thermal pump system 104 may obtain the geo-location information using a global positioning system (GPS) and/or another automatic method of determining the location.

Block 710 includes connecting to the network. For instance, the controller of the thermal pump system 104 may connect to the network 106 using the communication interface 308 (e.g., gateway) such as by using one or more communication protocols (e.g., 5G cellular network and/or WIFI).

Block 712 includes registering with the remote computing system 110. For instance, using the communication interface 308, the controller of the thermal pump system 104 may register the thermal pump system 104 with the remote computing system 110. For example, now that the thermal pump system 104 is connected to the remote computing system 110 via the network 106, the thermal pump system 104 establishes itself with the remote computing system 110 (e.g., a cloud server) that optimizes the dispatch of the energy storage device. In other words, the controller may provide registration information indicating a username, password, geo-location of the thermal pump system 104, and/or other information associated with thermal pump system 104 to register the thermal pump system 104 with the remote computing system 110.

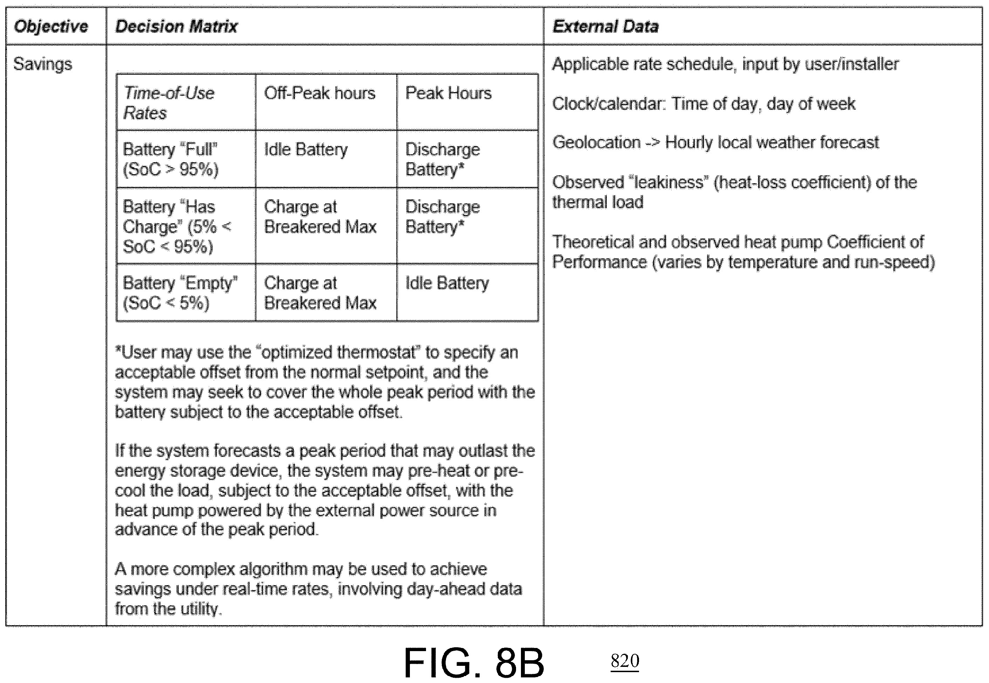

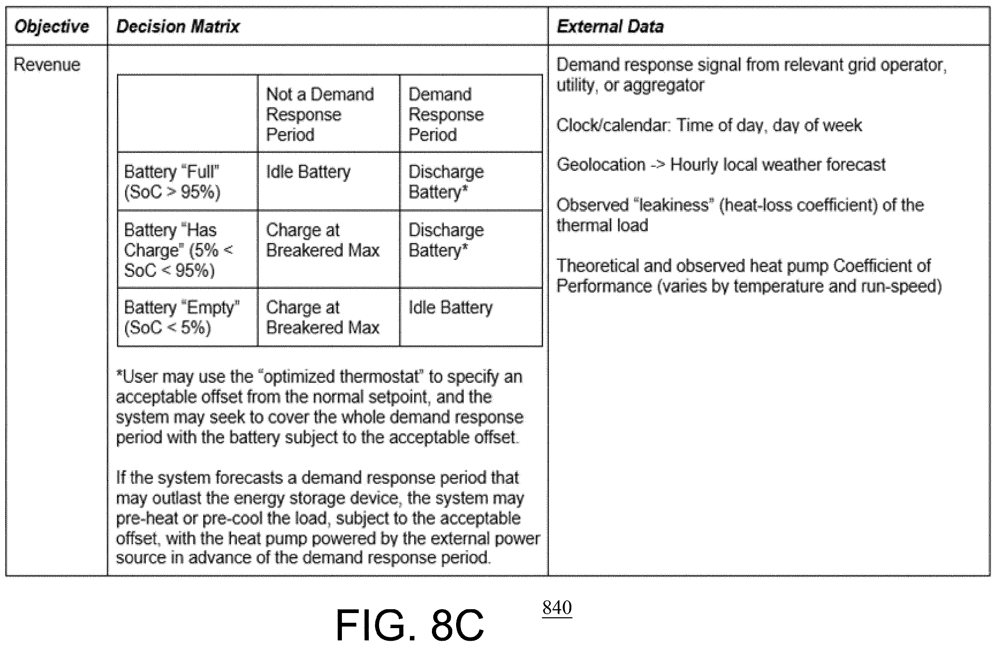

Referring to FIG. 7B, block 714 includes checking whether the energy storage device is "unlocked." For instance, this refers to whether the household has the authority to dispatch the energy storage device, such as through a mobile application or a switch on the thermal pump system 104. In some instances, a discount or subsidy may be provided to the household in order to control the energy storage device from off-site, keeping it "locked" to the household. For example, the controller of the thermal pump system 104 may receive an indication indicating whether the energy storage device is "unlocked." The indication may be from an installer that installs the thermal pump system 104. For instance, during installation, the installer may provide installer input to the thermal pump system 104 indicating whether the thermal pump system 104 is "locked" or "unlocked." Flowchart 700 proceeds to blocks 716 or 718 based on the thermal pump system 104 being "locked" or "unlocked." Additionally, and/or alternatively, the remote computing system 110 may provide the indication indicating whether the thermal pump system 104 is "locked" or "unlocked," and flowchart 700 may proceed to blocks 716 or 718 based on the indication from the remote computing system 110. In some examples, one or more objectives (e.g., the objectives described in FIGs. 8A-8D) may be based on whether the energy storage device is "locked" or "unlocked." For instance, the thermal pump system 104 may operate with a savings or revenue objective (e.g., the objectives shown in tables 820 or 840 of FIGs. 8B and 8C) based on whether the energy storage device is "locked" or "unlocked"

If yes, flowchart 700 moves to block 718 and connecting with a user controller (e.g., a mobile application). For instance, the user controller may be a user device such as, but not limited to, a mobile phone that runs one or more mobile applications. For example, the controller of the thermal pump system 104 may connect to the user device (e.g., the user controller) using the communication interface.

At block 720, the user may select the operating mode (e.g., the operating modes indicated by blocks 610-614). For instance, the user sets rules for dispatching the energy storage device via the mobile application. For example, the user device may receive user input indicating a selected operating mode such as use the external power source 108 to power the heat pump or use the energy storage device to power the heat pump. The user device may communicate the user input indicating the operating mode to the controller of the thermal pump system.

At block 722, the controller of the thermal pump system 104 may control the charge, discharge, run-speed, and/or temperature target based on whether the energy storage device is "unlocked" or "locked" (e.g., whether the installer has selected to manually control the heat pump or have the controller of the thermal pump system 104 and/or the remote computing system 110 control the heat pump) and/or based on one or more objectives, which is described in further detail in FIGs. 8A-8D. For instance, based on the received indication (e.g., whether the installer indicating whether the energy storage device is "locked" or "unlocked" and/or the user input indicating the selected operating mode), the controller may control the charge / discharge of the energy storage device, the run-speed and/or temperature target of the heat pump, and/or how the heat pump is powered (e.g., by discharging the energy storage device or by using the external power source 108).

Referring back to block 714, if no, flowchart 700 moves to block 716. At block 716, the operating mode may be selected automatically (e.g., based on performing flowchart 600). For instance, as mentioned above, the remote computing system 110 may select the operating mode. Then, similar to the above, at block 722, the remote computing system 110 may generate the control instructions indicating the charge, discharge, run-speed, and/or temperature target of the thermal pump system 104 based on the selected operating mode and/or the objectives described in FIGs. 8A-8D. Afterwards, the remote computing system 110 may provide the control instructions to the controller of the thermal pump system 104, and the controller may control the charge, discharge, run-speed, and/or temperature target of the thermal pump system 104.

Additionally, and/or alternatively, as also mentioned above, flowchart 600 may be performed by the controller of the thermal pump system 104 itself (e.g., the thermal pump system 104 may be locally controlled). As such, based on performing flowchart 600 and/or the objectives, the controller of the thermal pump system 104 may perform blocks 716 and 722 (e.g., receive the grid event and/or the power disruption, determine the selected operating mode, and control the charge, discharge, run-speed, and/or temperature target of the thermal pump system 104 without any control instructions from the remote computing system 110).

After block 722, the thermal pump system 104 updates the operating mode 724, and moves back to block 714 such that blocks 714-722 may be repeated.

As described above, the remote computing system 110 and/or the controller may perform blocks 716, 720, and/or 722 (e.g., select the operating mode and/or control the charge, discharge, run-speed, and/or temperature target) based on one or more objectives. FIGs. 8A-8D shows exemplary objectives of the thermal pump system in accordance with one or more examples of the present applications. For example, FIGs. 8A-8D show tables 800, 820, 840, and 860 with the objectives, decision matrix, and external data. For instance, for one or more objectives, the remote computing system 110 and/or the controller of the thermal pump system 104 may perform blocks 716, 720, and/or 722 based on the external data and the decision matrix. For instance, as mentioned above, in some embodiments, to perform blocks 716, 720, and/or 722, the controller and/or the remote computing system 110 may use flowchart 600. Additionally, and/or alternatively, for performing these blocks, the controller and/or the remote computing system 110 may use the objectives shown in the tables. In some instances, the remote computing system 110 and/or the controller of the thermal pump system 104 may perform the objectives described by FIGs. 8A-8D separate from FIGs. 6 and/or 7 (e.g., without performing one or more blocks of flowcharts 600 and/or 700).

For instance, referring to FIG. 8A, table 800 shows the objective "backup." For instance, the remote computing system 110 and/or the controller of the thermal pump system 104 may receive and/or obtain external data such as the input voltage (e.g., the input voltage that is being provided from the transformer and rectifier 352 to the charge controller 354 of FIG. 3B), geolocation (e.g., hourly local weather forecast), observed "leakiness" (heat-loss coefficient of the thermal load), and/or theoretical and/or observed heat pump coefficient of performance, which may vary based on temperature and/or run-speed.

Using the external data, the remote computing system 110 and/or the controller of the thermal pump system 104 may perform the decision matrix. For example, the system (e.g., the remote computing system 110 and/or the controller) may determine whether there is a disruption to the external power source 108. Then, based on the state of charge of the battery (e.g., the energy storage device) and whether there is a disruption, the system may select an operating mode such as idle battery, charge at breakered max, and/or discharge battery. For example, based on the battery being full (e.g., SoC greater than 95%) and the external power source 108 is intact, the system may select to idle the battery. Based on the battery not being full (e.g., the SoC of the battery being less than 95%), the system may select to charge at breakered max. The breakered max may refer to the maximum power the battery can pull while accommodating the contemporaneous needs of the heat pump, without overloading the circuit of the thermal pump system 104. Based on the battery being full and/or has charge (e.g., SoC greater than 5%) and the external power source 108 has an external power disruption, the system may select to discharge the battery. The heat pump run-speed and/or temperature target may be based on the external data to control the rate of discharge. For instance, the user may use the optimized thermostat to specify an acceptable offset from the normal set-point (e.g., operate in the specialized thermostat operating mode), and the system may provide an estimate of how long the battery can maintain that, and discharge the battery until it can no longer maintain this operating mode. Additionally, and/or alternatively, the system may present a menu of options to the user. For instance, the user may specify whether they want to maintain the specialized thermostat operating mode for a set amount of time (e.g., 70 degrees Fahrenheit for two hours or 50 degrees Fahrenheit for sixteen hours). Additionally, and/or alternatively, if the system forecasts an external power disruption that may outlast the energy storage device, the system may pre-heat or pre-cool the load with the heat pump powered by the external power source 108 in advance of the external power disruption. In other words, if the system determines that the charge of the battery is not sufficient to power the heat pump for the entire duration of the external power disruption of the external power source 108, the system may use the heat pump to pre-heat or pre-cool the thermal load prior to the external power source 108 encountering the power disruption. Based on the battery being empty and there is an external power disruption, the system may determine to idle the battery.

Referring to FIG. 8B, table 820 shows the objective "savings." For instance, the system (e.g., the remote computing system 110 and/or the controller of the thermal pump system 104) may receive and/or obtain external data such as applicable rate schedule, which may be provided as input by a user / installer (e.g., the user / installer may provide user input indicating the applicable rate schedule to the thermal pump system 104), clock / calendar indicating the time of day, day of week, and so on, the geolocation information, observed "leakiness" (heat-loss coefficient of the thermal load), and/or theoretical and/or observed heat pump coefficient of performance, which may vary based on temperature and/or run-speed.

Using the external data, the system may perform the decision matrix. For example, the system may determine, based on the applicable rate schedule, clock / calendar, and/or other external data, whether the current time indicates peak hours or off-peak hours. Then, based on the state of charge of the battery (e.g., the energy storage device) and whether it is currently peak hours or off-peak hours, the system may select an operating mode such as idle battery, charge at breakered max, and/or discharge battery. For example, based on the battery being full (e.g., SoC greater than 95%) and during off-peak hours, the system may select to idle the battery. Based on the battery not being full (e.g., the SoC of the battery being less than 95%) and during off-peak hours, the system may select to charge at breakered max. Based on the battery being full and/or has charge (e.g., SoC greater than 5%) and during peak hours, the system may select to discharge the battery. The heat pump run-speed and/or temperature target may be based on the external data to control the rate of discharge. For instance, the user may use the optimized thermostat to specify an acceptable offset from the normal set-point (e.g., operate in the specialized thermostat operating mode), and the system may seek to cover the whole peak period with the energy storage device subject to the acceptable offset. Additionally, and/or alternatively, if the system forecasts a peak period that may outlast the energy storage device, the system may pre-heat or pre-cool the load, subject to the acceptable offset, with the heat pump powered by the external power source 108 in advance of the peak period. In other words, if the system determines that the charge of the battery is not sufficient to power the heat pump for the entire duration of the peak period, the system may use the heat pump to pre-heat or pre-cool the thermal load prior to the peak period. In some examples, the system may use a more complex algorithm to achieve savings under real-time rates, which may involve day-ahead data from the utility system (e.g., the external power source 108). Based on the battery being empty and it is during peak hours, the system may determine to idle the battery.

Referring to FIG. 8C, table 840 shows the objective "revenue." For instance, the system (e.g., the remote computing system 110 and/or the controller of the thermal pump system 104) may receive and/or obtain external data such as the demand response signal (e.g., the demand response signal described above, which may be from a relevant grid operator, utility, and/or aggregator), clock / calendar indicating the time of day, day of week, and so on, the geolocation information (e.g., hourly local weather forecast), observed "leakiness" (heat-loss coefficient of the thermal load), and/or theoretical and/or observed heat pump coefficient of performance, which may vary based on temperature and/or run-speed.

Using the external data, the system may perform the decision matrix. For example, the system may determine whether the current time indicates a demand response period. Then, based on the state of charge of the battery (e.g., the energy storage device) and whether it is a demand response period, the system may select an operating mode such as idle battery, charge at breakered max, and/or discharge battery. For example, based on the battery being full (e.g., SoC greater than 95%) and during not a demand response period, the system may select to idle the battery. Based on the battery not being full (e.g., the SoC of the battery being less than 95%) and during a not a demand response period, the system may select to charge at breakered max. Based on the battery being full and/or has charge (e.g., SoC greater than 5%) and during a demand response period, the system may select to discharge the battery. The heat pump run-speed and/or temperature target may be based on the external data to control the rate of discharge. For instance, the user may use the optimized thermostat to specify an acceptable offset from the normal set-point (e.g., operate in the specialized thermostat operating mode), and the system may seek to cover the whole peak period with the energy storage device subject to the acceptable offset. Additionally, and/or alternatively, if the system forecasts a demand response period that may outlast the energy storage device, the system may pre-heat or pre-cool the load, subject to the acceptable offset, with the heat pump powered by the external power source 108 in advance of the demand response period. In other words, if the system determines that the charge of the battery is not sufficient to power the heat pump for the entire duration of the demand response period, the system may use the heat pump to pre-heat or pre-cool the thermal load prior to the demand response period. Based on the battery being empty and during a demand response period, the system may determine to idle the battery.

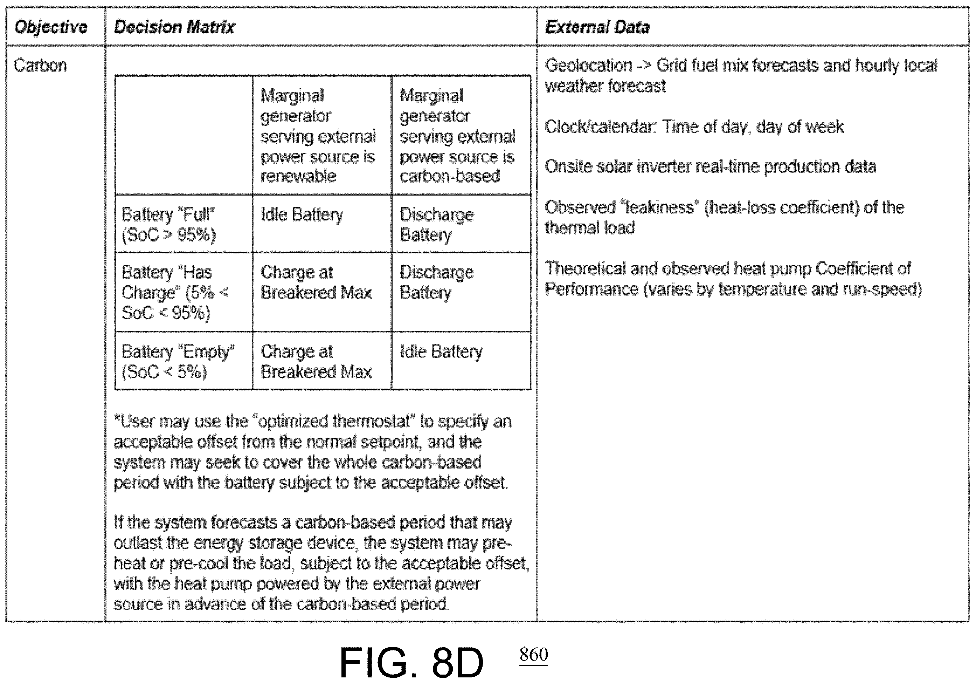

Referring to FIG. 8D, table 860 shows the objective "carbon." For instance, the system (e.g., the remote computing system 110 and/or the controller of the thermal pump system 104) may receive and/or obtain external data such as clock / calendar indicating the time of day, day of week, and so on, the geolocation information (e.g., the grid fuel mix forecasts, hourly local weather forecast), on-site solar inverter real-time production data, observed "leakiness" (heat-loss coefficient of the thermal load), and/or theoretical and/or observed heat pump coefficient of performance, which may vary based on temperature and/or run-speed.

Using the external data, the system may perform the decision matrix. For example, the system may determine whether the marginal generator serving the external power source 108 is renewable or carbon-based. Then, based on the state of charge of the battery (e.g., the energy storage device) and whether the external power source 108 is renewable or carbon-based, the system may select an operating mode such as idle battery, charge at breakered max, and/or discharge battery. For example, based on the battery being full (e.g., SoC greater than 95%) and the external power source 108 is renewable, the system may select to idle the battery. Based on the battery not being full (e.g., the SoC of the battery being less than 95%) and the external power source 108 is renewable, the system may select to charge at breakered max. Based on the battery being full and/or has charge (e.g., SoC greater than 5%) and the external power source 108 is carbon-based, the system may select to discharge the battery. The heat pump run-speed and/or temperature target may be based on the external data to control the rate of discharge. For instance, the user may use the optimized thermostat to specify an acceptable offset from the normal set-point (e.g., operate in the specialized thermostat operating mode), and the system may seek to cover the carbon-based period with the energy storage device subject to the acceptable offset. Additionally, and/or alternatively, if the system forecasts a carbon-based period that may outlast the energy storage device, the system may pre-heat or pre-cool the load, subject to the acceptable offset, with the heat pump powered by the external power source 108 in advance of the carbon-based period. In other words, if the system determines that the charge of the battery is not sufficient to power the heat pump for the entire duration of the carbon-based period, the system may use the heat pump to pre-heat or pre-cool the thermal load prior to the carbon-based period. Based on the battery being empty and the external power source 108 is carbon-based, the system may determine to idle the battery.

In some examples, as mentioned above, the thermal pump system 104 may perform one or more objectives 800, 820, 840, and/or 860 based on one or more factors from flowchart 600 and/or 700. For example, based on whether the energy storage device is "unlocked" or "locked", the thermal pump system 104 may perform the "savings" or "revenue" objective shown in tables 820 and 840.

A number of implementations have been described. Nevertheless, it will be understood that additional modifications may be made without departing from the scope of the inventive concepts described herein, and, accordingly, other examples are within the scope of the following claims. For example, it will be appreciated that the examples of the application described herein are merely exemplary. Variations of these examples may become apparent to those of ordinary skill in the art upon reading the foregoing description. The inventor expects skilled artisans to employ such variations as appropriate, and the inventor intends for the application to be practiced otherwise than as specifically described herein. Accordingly, this application includes all modifications and equivalents of the subject matter recited in the claims appended hereto as permitted by applicable law. Moreover, any combination of the above-described elements in all possible variations thereof is encompassed by the application unless otherwise indicated herein or otherwise clearly contradicted by context.

It will further be appreciated by those of skill in the art that the execution of the various machine-implemented processes and steps described herein may occur via the computerized execution of processor-executable instructions stored on a non-transitory computer-readable medium, e.g., random access memory (RAM), read-only memory (ROM), programmable read-only memory (PROM), volatile, nonvolatile, or other electronic memory mechanism. Thus, for example, the operations described herein as being performed by computing devices and/or components thereof may be carried out by according to processor-executable instructions and/or installed applications corresponding to software, firmware, and/or computer hardware.

The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the application and does not pose a limitation on the scope of the application unless otherwise claimed. No language in the specification should be construed as indicating any non-claimed element as essential to the practice of the application.

## Claims

1. A system, comprising:
a thermal pump system, comprising:
a heat pump;
an energy storage device configured to provide power to the heat pump; and
a controller configured to:
receive, from a remote computing system, a request for a current state of charge of the energy storage device;
provide, to the remote computing system, the current state of charge of the energy storage device;
receive, from the remote computing system, one or more control instructions instructing the thermal pump system to power the heat pump using the energy storage device and/or an external power source; and
based on the one or more control instructions, electrically connect the energy storage device and/or the external power source to the heat pump such that the energy storage device and/or the external power source provide power to the heat pump; and
the remote computing system configured to:
provide the request for the current state of charge of the energy storage device;
receive the current state of charge of the energy storage device;
generate the one or more control instructions based on the current state of charge of the energy storage device; and
provide the one or more control instructions to the controller of the thermal pump system.

2. The system of claim 1, wherein the thermal pump system further comprises:
one or more transformers and rectifiers configured to transform alternating current (AC) power from the external power source to direct current (DC) power, wherein the one or more transformers and rectifiers are in series with the energy storage device and the heat pump.

3. The system of claim 1, wherein the thermal pump system further comprises:
a charge controller comprising a first relay associated with the external power source and a second relay associated with the energy storage device, and
wherein the controller is configured to electrically connect the energy storage device and/or the external power source to the heat pump by:
based on the one or more control instructions indicating for the heat pump to be provided power from the external power source, controlling the first relay of the charge controller to electrically connect the external power source to the heat pump; and
based on the one or more control instructions indicating for the heat pump to be provided power from the energy storage device, controlling the second relay of the charge controller to electrically connect the energy storage device to the heat pump.

4. The system of claim 1, wherein the thermal pump system further comprises:
an energy management system (EMS) configured to provide the current state of charge of the energy storage device to the controller.

5. The system of claim 1, wherein the thermal pump system further comprises:
an air handler, wherein the controller is further configured to:
control a fan speed of the air handler.

6. The system of claim 1, wherein the thermal pump system comprises a communication interface, and wherein the communication interface comprises the controller.

7. The system of claim 1, wherein the remote computing system is configured to generate the one or more control instructions by:
determining whether the energy storage device is able to be discharged based on comparing the current state of charge of the energy storage device with one or more thresholds; and
generating the one or more control instructions indicating for the heat pump to be powered by the energy storage device or by the external power source based on the comparison.

8. The system of claim 7, wherein the remote computing system is further configured to:
receive information indicating an active grid event or an external power disruption, and wherein generating the one or more control instructions indicating for the heat pump to be powered by the energy storage device or by the external power source is further based on the information indicating the active grid event or the external power disruption.

9. The system of claim 1, wherein the remote computing system is configured to generate the one or more control instructions by:
determining whether the energy storage device is charged based on comparing the current state of charge of the energy storage device with one or more thresholds; and
generating, based on the current state of charge of the energy storage device being below the one or more thresholds, the one or more control instructions indicating:
for the heat pump to be powered by the external power source; and
for the energy storage device to be charged by the external power source.

10. The system of claim 9, wherein the remote computing system is further configured to:
receive information indicating a current energy cost, and
wherein generating the one or more control instructions indicating for the energy storage device to be charged by the external power source is based on the information indicating the current energy cost.

11. The system of claim 1, wherein the remote computing system is configured to generate the one or more control instructions by:
determining whether the energy storage device is charged based on comparing the current state of charge of the energy storage device with one or more thresholds; and
generating, based on the current state of charge of the energy storage device being above the one or more thresholds, the one or more control instructions indicating:
for the heat pump to be powered by the external power source; and
idling the energy storage device.

12. The system of claim 1, wherein the external power source comprises one or more solar panels that are configured to provide solar power.

13. The system of claim 1, wherein the heat pump is an air conditioning unit.

14. A method, comprising:
receiving external data from an external data source;
obtaining an electrical measurement associated with a thermal pump system, wherein the thermal pump system comprises a heat pump and an energy storage device;
determining one or more operating modes for the thermal pump system based on the current state of charge of the energy storage device and the external data; and
controlling the thermal pump system based on the one or more operating modes, wherein controlling the thermal pump system comprises electrically connecting the energy storage device and/or an external power source to the heat pump such that the energy storage device and/or the external power source provide power to the heat pump.

15. The method of claim 14, wherein obtaining the electrical measurement associated with the thermal pump system comprises:
providing, to the thermal pump system, a request for a current state of charge of the energy storage device; and
receiving, from the thermal pump system, the current state of charge of the energy storage device,
wherein controlling the thermal pump system based on the one or more operating modes comprises:
generating one or more control instructions based on the current state of charge of the energy storage device; and
providing the one or more control instructions to a controller of the thermal pump system, wherein the controller electrically connects the energy storage device and/or an external power source to the heat pump based on the one or more control instructions.

16. The method of claim 14, wherein obtaining the electrical measurement associated with the thermal pump system comprises:
providing, by a gateway controller and to an energy management system (EMS), a request for a current state of charge of the energy storage device, wherein the thermal pump system further comprises the gateway controller and the EMS; and
receiving, by the gateway controller and from the EMS, information indicating the current state of charge of the energy storage device.

17. The method of claim 14, further comprising:
determining, based on external data, whether the external power source is encountering a power disruption, and
wherein determining the one or more operating modes for the thermal pump system is further based on whether the external power source is encountering the power disruption.

18. The method of claim 14, further comprising:
determining, based on external data, whether the external power source is renewable or carbon-based, and
wherein determining the one or more operating modes for the thermal pump system is further based on whether the external power source is renewable or carbon-based.

19. A method comprising:
obtaining an electrical measurement associated with a thermal pump system comprising a heat pump and an energy storage device, wherein an electrical connection connects the heat pump to the energy storage device and the electrical measurement is at a location along the electrical connection;
determining one or more operating modes for the thermal pump system based on the electrical measurement; and
controlling the thermal pump system based on the one or more operating modes, wherein controlling the thermal pump system comprises electrically connecting the energy storage device and/or an external power source to the heat pump such that the energy storage device and/or the external power source provide power to the heat pump.

20. The method of claim 19, wherein determining the one or more operating modes for the thermal pump system based on the electrical measurement comprises:
determining a current operating mode of the thermal pump system;
comparing the electrical measurement at the location along the electrical connection between the energy storage device and the heat pump with an operating threshold; and
determining to switch from the current operating mode to a new operating mode based on the comparison.
